# EUROPEAN PATENT APPLICATION

(11) **EP 3 998 458 A2**
(43) Date of publication of application: **18.05.2022**
(21) Application number: 22163313.4
(22) Date of filing: 21.03.2022
(51) Int. Cl.: G01C 21/36, G01C 21/00

(54) **METHOD AND APPARATUS FOR GENERATING ZEBRA CROSSING IN HIGH RESOLUTION MAP, AND ELECTRONIC DEVICE**

(30) Priority: 17.06.2021 CN 202110672284
(71) Applicant: Apollo Intelligent Driving Technology (Beijing) Co., Ltd., Haidian District Beijing 100085 (CN)
(72) Inventor: LIU, Zhixu, Beijing, 100085 (CN)
(74) Representative: advotec.

(57) **Abstract**

A method for generating a zebra crossing includes: obtaining an original vertex sequence for generating a zebra crossing from an image, and determining a first vertex sequence by merging a plurality of vertices in the original vertex sequence; obtaining a plurality of lines by connecting a plurality of vertices in the first vertex sequence in order, and determining a first target edge and a second target edge approximate to the first target edge from the plurality of lines; obtaining a first vertex set corresponding to the first target edge and a second vertex set corresponding to the second target edge, and generating an area to be cut based on the first vertex set and the second vertex set; and cutting the area to be cut to obtain cutting elements, and generating the zebra crossing by filling alternately a part of cutting elements.

## Description

### TECHNICAL FIELD

The disclosure relates to the field of image processing, especially to the field of artificial intelligence such as computer vision, and the field of intelligent transportation.

### BACKGROUND

Currently, high definition (HD) maps have been widely used in practical scenarios. In the related art, an outer contour of the zebra crossing is drawn for imaging the zebra crossing, which has low accuracy and poor visual effect. Alternatively, the imaging of the zebra crossing is carried out by manual intervention, which has high labor cost and low efficiency.

Therefore, how to improve the efficiency and the accuracy of imaging the zebra crossing is a problem that needs to be solved currently.

### SUMMARY

Embodiments of the disclosure provide a method for generating a zebra crossing and an apparatus for generating a zebra crossing, an electronic device, a storage medium and a computer program product.

According to a first aspect of the disclosure, a method for generating a zebra crossing is provided. The method includes: obtaining an original vertex sequence for generating a zebra crossing from an image, and determining a first vertex sequence by merging a plurality of vertices in the original vertex sequence; obtaining a plurality of lines by connecting a plurality of vertices in the first vertex sequence in order, and determining a first target edge and a second target edge approximate to the first target edge from the plurality of lines; obtaining a first vertex set corresponding to the first target edge and a second vertex set corresponding to the second target edge, and generating an area to be cut based on the first vertex set and the second vertex set; and cutting the area to be cut to obtain cutting elements, and generating the zebra crossing by filling alternately a part of cutting elements.

According to a second aspect of the disclosure, an apparatus for generating a zebra crossing is provided. The apparatus may include: a merging module, a determining module, an obtaining module, and a cut generating module.

The merging module is configured to obtain an original vertex sequence for generating a zebra crossing from an image, and determine a first vertex sequence by merging a plurality of vertices in the original vertex sequence. The determining module is configured to obtain a plurality of lines by connecting a plurality of vertices in the first vertex sequence in order, and determine a first target edge and a second target edge approximate to the first target edge from the plurality of lines. The obtaining module is configured to obtain a first vertex set corresponding to the first target edge and a second vertex set corresponding to the second target edge, and generate an area to be cut based on the first vertex set and the second vertex set. The cut generating module is configured to cut the area to be cut to obtain cutting elements, and generate the zebra crossing by filling alternately a part of cutting elements.

According to a third aspect of the disclosure, an electronic device is provided. The electronic device includes: at least one processor and a memory. The memory is communicatively connected with the at least one processor and configured to store with instructions executable by the at least one processor. When the instructions are executed by the at least one processor, the at least one processor is caused to execute the method for generating a zebra crossing as described in the first aspect.

According to a fourth aspect of the disclosure, a non-transitory computer-readable storage medium storing computer instructions is provided, when the computer instructions are executed by the processor, the method for generating a zebra crossing according to the first aspect is implemented.

According to a fifth aspect of the disclosure, a computer program product including a computer program is provided. When the computer program is executed by a processor, the method for generating a zebra crossing according to the first aspect is implemented.

In the disclosure, no excessive human intervention is required to effectively improve the image generation efficiency of the zebra crossing. By merging the vertices of the original vertex sequence, the noise vertices in the vertices of the original vertex sequence can be filtered, the area to be cut is generated based on the first vertex set and the second vertex set, and the acquired cutting elements are filled at intervals, so that the final zebra crossing has a cutting effect, the visual effect is ensured and the imaging accuracy of the zebra crossing is improved.

It should be understood that the content described in this section is not intended to identify the key or important features of the embodiments of the disclosure, nor is it intended to limit the scope of the disclosure. Additional features of the disclosure will be easily understood through the following description.

### BRIEF DESCRIPTION OF THE DRAWINGS

The drawings are used to better understand the solution and do not constitute a limitation of the disclosure.
FIG. 1 is a schematic diagram of a method for generating a zebra crossing according to an embodiment of the disclosure.
FIG. 2 is a schematic diagram of a method for generating a zebra crossing according to an embodiment of the disclosure.
FIG. 3 is a schematic diagram of a method for generating a zebra crossing according to another embodiment of the disclosure.
FIG. 4 is a schematic diagram of a method for generating a zebra crossing according to another embodiment of the disclosure.
FIG. 5 is a schematic diagram of a method for generating a zebra crossing according to another embodiment of the disclosure.
FIG. 6 is a schematic diagram of a method for generating a zebra crossing according to another embodiment of the disclosure.
FIG. 7 is a schematic diagram of a method for generating a zebra crossing according to another embodiment of the disclosure.
FIG. 8 is a schematic diagram of a method for generating a zebra crossing according to another embodiment of the disclosure.
FIG. 9 is a schematic diagram of a method for generating a zebra crossing according to another embodiment of the disclosure.
FIG. 10 is a schematic diagram of a method for generating a zebra crossing according to another embodiment of the disclosure.
FIG. 11 is a structural schematic diagram of an apparatus for generating a zebra crossing according to an embodiment of the disclosure.
FIG. 12 is a structural schematic diagram of an apparatus for generating a zebra crossing according to another embodiment of the disclosure.
FIG. 13 is a schematic block diagram of an electronic device according to an embodiment of the disclosure.

### DETAILED DESCRIPTION

The exemplary embodiments of the disclosure are described below in combination with the accompanying drawings, which include various details of the embodiments of the disclosure to facilitate understanding, and should be considered merely exemplary. Therefore, those skilled in the art should know that various changes and modifications can be made to the embodiments described herein without departing from the scope of the disclosure. For the sake of clarity and conciseness, descriptions of well-known functions and structures have been omitted from the following description.

Image processing is a technique of analyzing an image with a computer to achieve a desired result, which is also known as PhotoCap. Image processing generally refers to processing a digital image. The digital image is a large two-dimensional array obtained by shooting with industrial cameras, video cameras and scanners. The element of the array is called a pixel and its value is called a grayscale value. Image processing technique generally includes 3 parts: image compression, enhancement and restoration, and matching, description and recognition.

Computer vision is a science that studies how to make machines "see". In particular, machine vision such as identifying, tracking and measuring is performed on a target by cameras and computers instead of the human eyes. Then, graphics processing is further performed by a computer to generate images suitable for human eye to observe or transmission to an instrument for detection. As a scientific subject, computer vision studies theories and techniques that attempt to build artificial intelligence systems that can derive "information" from images or multidimensional data. The "information" refers to that can be used to help make a "decision" as defined by Shannon. Since perception can be considered as extracting information from sensory signals, computer vision can also be considered as a science that studies how to make artificial systems "perceive" from images or multidimensional data.

Intelligent Traffic System (ITS), also known as intelligent transportation system, is a system that effectively integrates advanced science and technology, such as information technology, computer technology, data communication technology, sensor technology, electronic control technology, automatic control technology, operations research and artificial intelligence, into transportation, service control and vehicle manufacture, strengthens the connection between vehicles, roads and users, in order to form an integrated transportation system that ensures safety, increases efficiency, improves the environment and saves energy.

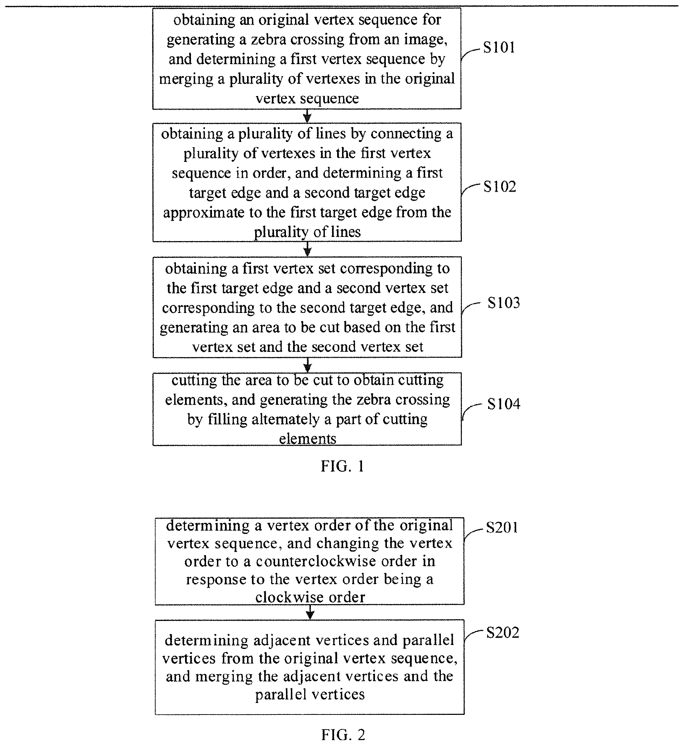

FIG. 1 is a schematic diagram of a method for generating a zebra crossing according to an embodiment of the disclosure. The execution subject of the method is a client terminal, as shown in FIG. 1. The method includes the following steps.

In S101, an original vertex sequence for generating a zebra crossing from an image is obtained, and a first vertex sequence is determined by merging a plurality of vertices in the original vertex sequence.

Currently, high definition (HD) maps have been widely used in practical scenarios, for example, unmanned vehicles can realize environment perception, positioning and decision making through the HD maps. In some scenarios, based on the HD maps, high definition positioning, cloud computing and other related arts are adopted to realize monitoring, navigation, public transportation priority for special vehicles. Therefore, the higher the accuracy of the HD map, the larger the amount of information, and the more accurate the support it can provide.

In the actual scenarios, in order to more clearly identify the area where pedestrians can safely walk, the appearance of the pedestrian crossing is similar to that of a zebra. That is, based on the original color of the lane, the pedestrian crossing is divided by white color blocks to present black blocks alternating with white blocks, so that the pedestrian crossing can also be called the zebra crossing.

In practice, a walking range of pedestrians crossing the lane can be limited by markings of the zebra crossing on the road where vehicles are moving, to ensure the safety of pedestrians. Therefore, improving the imaging accuracy of the zebra crossing in the imaging of HD maps to the greatest extent can provide more favorable support for travel safety.

In an embodiment, the original outline of the zebra crossing can be acquired by an image acquisition device which collects the HD map, such as a drone and an aerial photography device. The original contour of the collected zebra crossing is mostly an irregular polygon, and each vertex in the polygon can be identified as the original vertex of the zebra crossing.

Generally, when image acquisition is performed by the image acquisition device of the HD map, multiple pieces of information related to buildings and/or landmarks on the ground within an acquisition area can be acquired. Markers can be set for different buildings and/or landmarks, and the acquired data can be stored in corresponding markers. For example, the original vertex sequence data of the collected zebra crossing can be stored at a set position under the corresponding marker of the zebra crossing. By establishing a mapping relationship between the markers and multiple pieces of the collected data, the collected data can be queried. Further, the original vertex sequence of the zebra crossing can be acquired.

It should be noted that the obtained original vertices are arranged in a clockwise order or in a counterclockwise order.

Since the original contour of the zebra crossing is often an irregular polygon, further processing the original contour of the zebra crossing is required to achieve more accurate imaging of the zebra crossing.

In an embodiment, the original vertices of the zebra crossing can be merged to reduce the influence of redundant vertices on the imaging of the zebra crossing.

For example, when the distance between two adjacent original vertices A and B is very small among the obtained original vertices, the original vertex A and original vertex B can be merged to generate a new vertex C. The vertex C is used as a new vertex of the polygon the zebra crossing contour.

For example, in the obtained original vertex sequence, for the three adjacent original vertices D, E and F, the line between the original vertex D and the original vertex E can be generated as edge 1, and the line between the original vertex E and the original vertex F can be generated as edge 2. If a line connecting the edge 1 and edge 2 is visually approximate to a straight line, the original vertex E can be filtered and a line between the original vertex D and the original vertex F can be used as a new edge.

Further, a sequence formed of the processed vertices is identified as the first vertex sequence.

In S102, a plurality of lines are obtained by connecting a plurality of vertices in the first vertex sequence in order, and a first target edge and a second target edge approximate to the first target edge are determined from the plurality of lines.

All the vertices in the first vertex sequence may be connected two by two, either in a clockwise or counterclockwise order, until all the vertices are connected end to end, and the polygon corresponding to the outer contour of the zebra crossing is obtained.

Generally, the edges of the polygon may have different lengths, all edges are compared to obtain the longest edge, and the longest edge identified as the first target edge. The first target edge is a line segment.

The length of the first target edge is often the same as the width of the lane where the zebra crossing is located in its corresponding actual scene.

Further, after determining the first target edge, two vertices belonging to the first target edge in the polygon can be obtained, and all the vertices of the polygon other than the two vertices are connected to each other, to obtain a broken line, which is determined as the second target edge approximate to the first target edge.

The relative positions of the second target edge and the first target edge are approximately parallel, so the width of the zebra crossing can be determined based on a distance between the second target edge and the first target edge.

In S103, a first vertex set corresponding to the first target edge and a second vertex set corresponding to the second target edge are obtained, and an area to be cut is generated based on the first vertex set and the second vertex set.

In order to ensure a visual effect of imaging the zebra crossing, the polygon corresponding to the outer contour of the zebra crossing can be cut according to the contour of the zebra crossing in the actual scene, so that the final imaging has a cutting effect.

The area to be cut can be determined according to the vertices of the polygon corresponding to the outer contour of the zebra crossing.

In some embodiments of the disclosure, the first vertex set includes the vertices formed of the first target edge, and the second vertex set includes the vertices formed of the second target edge approximate to the first target edge. Further, the determination of the area to be cut can be achieved based on the first vertex set and the second vertex set.

The first vertex set contains two vertices at both ends of the first target edge, and the second vertex set contains two vertices both ends of the second target edge. From the two vertices at the two ends of the second target edge, a vertex closest to one of the two vertices at both ends of the first target edge is obtained, and a line is drawn between the two adjacent vertices as one boundary of the area to be cut. Further, the other vertex of the two vertices of the two ends of the second target edge is connected to the other vertex of the two vertices of the two ends of the first target edge, to obtain another line as another boundary of the area to be cut.

Further, the area to be cut is generated based on the above two boundaries, the first target edge and the second target edge. The area to be cut can be understood as, a polygon corresponding to the outer contour of the zebra crossing.

In S104, the area to be cut is cut, and the zebra crossing is generated by filling alternately a part of cutting elements.

It is possible to cut the area to be cut per a set cutting width from a set start position, and then a plurality of cutting elements are obtained after cutting.

In an embodiment, boundary points in the area to be cut can be obtained for generating the boundaries of the cutting element, and the boundary of the cutting element can be generated by connecting boundary points on the first target edge with the corresponding boundary points on the second target edge, so as to realize the cutting of the area to be cut and thus obtain the cutting elements.

Any of the vertices in the first vertex set can be used as the start point of cutting.

In the actual scene, the appearance of the zebra crossing is in different shades of color, so it is possible to fill some cutting elements in the acquired cutting elements with a set color. In the embodiment of the disclosure, the acquired cutting elements are arranged in an order, and in order to be close to the zebra crossing appearance in the actual scene, the cutting elements are filled with color at intervals among all the cutting elements. For example, if the first cutting element is filled with color, the third cutting element in the order can be filled with color, to realize imaging of the zebra crossing.

In the method for generating a zebra crossing according to the disclosure, a first vertex sequence of a new polygon is generated by merging a plurality of vertices of the original vertex sequence of the acquired zebra crossing. Any two of the plurality of vertices in the first vertex sequence are connected in order to obtain a line. The first target edge and the second target edge approximate to the first target edge are determined from the polygon corresponding to the outer contour of the zebra crossing. The first vertex set corresponding to the first target edge and the second vertex set corresponding to the second target edge are obtained. Furthermore, the area to be cut is generated based on the first vertex set and the second vertex set, and the area to be cut is cut to obtain a plurality of cutting elements, and the zebra crossing is generated by filling alternately a part of cutting elements. In this way, the zebra crossing image is generated. In the disclosure, no excessive human intervention is required to effectively improve the image generation efficiency of the zebra crossing. By merging the vertices of the original vertex sequence, the noise vertices in the vertices of the original vertex sequence can be filtered, the area to be cut is generated based on the first vertex set and the second vertex set, and the acquired cutting elements are filled at intervals, so that the final zebra crossing has a cutting effect, the visual effect is ensured and the imaging accuracy of the zebra crossing is improved.

In the above embodiments, the processing of the original vertex sequence can be further understood in combination with FIG. 2. FIG. 2 is a schematic diagram of a method for generating a zebra crossing according to another embodiment of the disclosure, where the method execution subject is a client terminal. As shown in FIG. 2, the method includes the following steps S201-S202.

In S201, a vertex order of the original vertex sequence is determined, and the vertex order is changed to a counterclockwise order in response to the vertex order being a clockwise order.

Generally, an order of the original vertices can be obtained from the original vertex sequence captured by the image acquisition device. The original vertices may be arranged in a counterclockwise order or in a clockwise order.

In the embodiments, the vertex order needs to be corrected to a counterclockwise direction, which means that if the order of the acquired original vertices is arranged in the clockwise order, the vertices need to be reordered in the counterclockwise order.

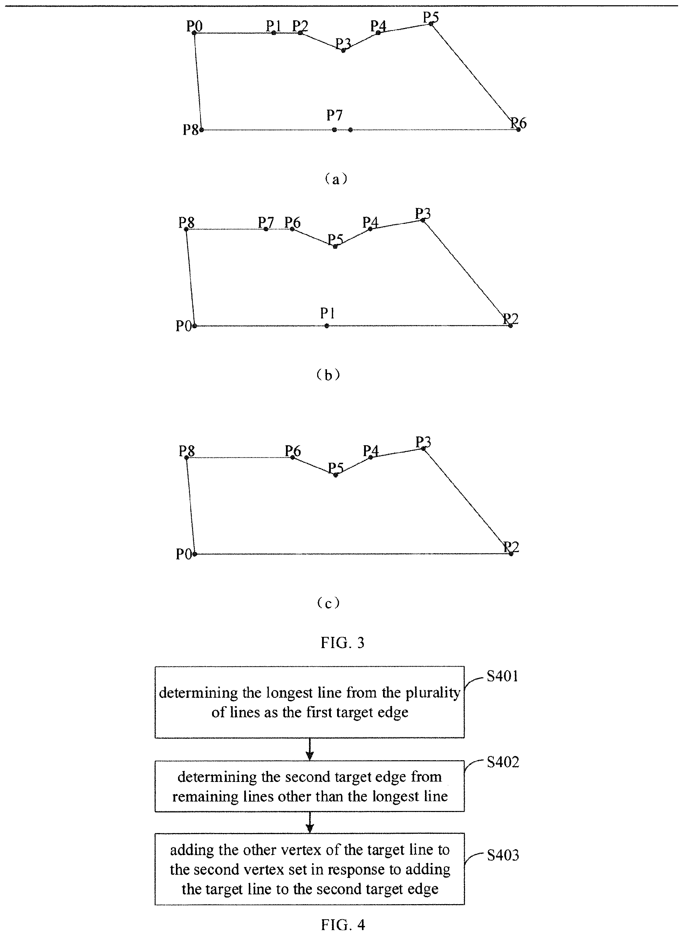

As shown in FIG. 3(a), P0, P1, P2, P3, P4, P5, P6, P7 and P8 are the acquired original vertices. As shown in FIG. 3(a), the acquired original vertices are arranged in the clockwise order, and then the original vertices are re-arranged in the counterclockwise order, as shown in FIG. 3(b).

In S202, a plurality of adjacent vertices and a plurality of parallel vertices are determined from the original vertex sequence, and the plurality of adjacent vertices and the plurality of parallel vertices are merged.

Generally, the shape of the polygon can be determined by a number of edges of the polygon, a length of each edge and an inner angle value. Therefore, there may be noises in the original vertices of the zebra crossing collected by the image acquisition device, and it can be understood that some of the original vertices may have a weak influence on the shape composition of the polygon corresponding to the outer contour of the zebra crossing, and when the outer contour of the zebra crossing is generated, the original vertices belonging to the noises can be filtered.

Further, the original vertices belonging to the noises can be adjacent vertices, parallel vertices, or other vertices that can be merged.

When a distance between two adjacent vertices is small, the two vertices may be identified as adjacent vertices. In an embodiment, a coordinate system can be set up to place the original vertex sequence in the coordinate system, in order to obtain coordinates of each original vertex. Based on the coordinates of the adjacent two vertices, the distance between the two vertices can be obtained, and when the distance satisfies a determination criterion of adjacent vertices, the two adjacent vertices can be determined as adjacent vertices.

Further, one of the adjacent vertices can be filtered as it belongs to the noise.

As shown in FIG. 3(b), a distance between vertex P7 and P6 is small, P6 and P7 are identified as adjacent vertices, and P7 can be merged with P6. Since P6 is at the inflection point, it is necessary to keep P6 and remove P7, as shown in FIG. 3(c).

For three adjacent vertices, every two vertices may be connected sequentially, and when the connected two lines are approximate to a straight line visually, the three adjacent vertices producing the above visual effect may be further identified as parallel vertices. In an embodiment, a coordinate system can be set up to place the original vertex sequence in the coordinate system, and the coordinates of each original vertex is thus obtained. Every two of the three adjacent vertices are sequentially connected to obtain two lines, and when an angle between the two lines satisfies a determination criterion of parallel vertices, the three adjacent vertices can be determined as parallel vertices. For example, the angle between the two lines is almost 0 degree, the three adjacent vertices can be determined as the parallel vertices.

Further, the middle vertex of the three adjacent vertices can be filtered as it belongs to the noise.

As shown in FIG. 3(b), the vertices P0, P1 and P2 are three adjacent vertices, where line 1 P0P1 and line 2 P1P2 are obtained. It is known from the figure that the angle between the line 1 and line 2 is close to 0°. Visually, after the line 1 is connected to the line 2, both the line 1 and the line 2 are nearly overlapped with the line P0P2, thus it is possible to merge the three adjacent vertices of P0, P1 and P2 to filter out the vertex P1, as shown in FIG. 3(c).

Further, after filtering out the noise vertices from the original vertices, the remaining vertices are identified as the first vertex sequence, and the polygon corresponding to the outer contour of the zebra crossing for subsequent imaging of the zebra crossing can be generated based on the first vertex sequence.

In the method for generating a zebra crossing according to the disclosure, the original vertex sequence is corrected to be in a counterclockwise order, and then all the adjacent vertices and parallel vertices in the original vertices are merged to filter out the noise vertices from the original vertices, which effectively improves the imaging efficiency of the zebra crossing.

On the basis of the above embodiments, the determination of the first target edge and the second target edge can be further understood in combination with FIG. 4. FIG. 4 is a schematic diagram of a method for generating a zebra crossing according to an embodiment of the disclosure, where the method execution subject is a client terminal. As shown in FIG. 4, the method includes the following steps S401-S403.

In S401, a length of each of the plurality of lines is obtained, and the longest line is determined as the first target edge.

In this disclosed embodiments, the length of the zebra crossing can be determined based on the first target edge. Therefore, it is necessary to select the longest edge of the polygon corresponding to the outer contour of the zebra crossing as the first target edge.

Further, a first vertex sequence can be obtained after the original vertices of the zebra crossing are merged, and each edge of the polygon corresponding to the outer contour of the zebra crossing after the merging process can be obtained by sequentially connecting every two vertices of the first vertex sequence. Further, based on the length of each edge, the longest edge is selected as the first target edge.

As shown in FIG. 3(c), after merging the vertices, the noise vertices P1 and P7 are filtered out, and the remaining vertices P0, P2, P3, P4, P5, P6, and P8 are used as the vertices of the polygon, and the first vertex sequence composed of the seven vertices is obtained. In FIG. 3(c), it can be seen that after connecting the above 7 vertices two by two in order, the longest line is the line P0P2, so the line P0P2 can be determined as the first target edge.

In S402, a second target edge approximate to the first target edge is determined from remaining lines other than the longest line.

After determining the line corresponding to the first target edge, the second target edge can be determined from the remaining lines. It can be understood that after determining the first target edge, a polyline formed by sequentially connecting the remaining vertices that do not belong to the first target edge can be determined as an initial second target edge.

Further, a supplementary line for the initial second target edge may be determined based on a relative relationship between two vertices located at two ends of the polyline and the first target edge, and a final second target edge may be generated from the initial second target edge and the determined supplementary line. In other words, the final second target edge may be composed of the initial second target edge and supplementary lines.

In a possible implementation, a supplementary line for the second target edge can be determined based on a position of a vertex at each end of the initial second target edge projected onto the first target edge.

Firstly, a target line that shares the same vertex with the first target edge is determined from the remaining lines.

The target line that shares the same vertex with the first target edge among the remaining lines refers to a line having a vertex that coincides with the vertex contained in the first target edge.

As shown in FIG. 3(c), the line P0P2 is determined to be the first target edge, then the line P0P8 and the line P2P3 are the target lines that share the same vertex with the first target edge.

Secondly, the target line is added to the initial second target edge in response to a projection point of the other vertex of the target line that is projected to the first target edge falling in the first target edge.

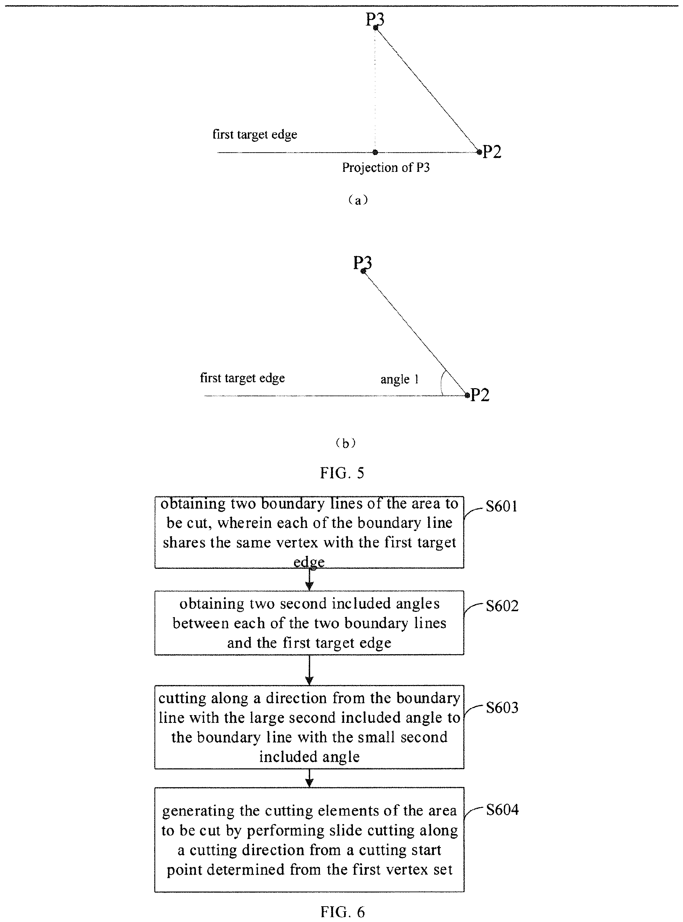

The other vertex of the target line can be understood as a vertex on the target line that does not belong to the first target edge. As shown in FIG. 5(a), the other vertex of the target line can be projected to the first target edge, and when the other vertex can be projected onto the first target edge, the target line can be identified as a supplementary line for the initial second target edge.

In a possible implementation, the supplementary line for the initial second target edge may be determined based on an angle generated after connecting a vertex at each end of the initial second target edge with a vertex at the adjacent end of the first target edge.

Firstly, a target line that shares the same vertex with the first target edge is determined from the remaining lines. The determination of the target line refers to the relevant details above, which is not repeated here.

Secondly, a first included angle between the target line and the first target edge is obtained. The angle between the target line and the first target edge is determined as the first included angle. As shown in FIG. 6, angle 1 is the first included angle.

Thirdly, in response to the first included angle being acute, the target line is added to the initial second target edge.

Generally, the included angle can be classified as an acute angle, a right angle and an obtuse angle. As shown in FIG. 5(b), when the first included angle is acute, the target line is identified as a supplementary line. Further, the target line can be added to the initial second target edge, to generate the final second target edge.

In S403, the other vertex of the target line is added to the second vertex set in response to adding the target line to the initial second target edge.

In this embodiment of the disclosure, the target line does not belong to the initial second target edge before the adding step, so one of two vertices of the target line does not belong to the second vertex set of the initial second target edge. When the target line is determined to be a supplementary line, the other vertex of the target line that do not belong to the second vertex set of the initial second target edge can be added to the second vertex set. The vertices to be added to the second vertex set are the shared vertices between the target line and the first target edge. After supplementing them to the second vertex set, the vertex belongs to both the first vertex set and the second vertex set.

In the method for generating a zebra crossing according to the disclosure, it is determined whether the target line is added to the second target edge based on a relative relationship between the acquired target line and the first target edge, and the final second target edge is then obtained. The imaging accuracy of the zebra crossing is ensured, to obtain better cutting effect.

Furthermore, cutting the polygon can be achieved based on the first target edge and the second target edge, as shown in FIG. 6. FIG. 6 is a schematic diagram of a method for generating a zebra crossing according to an embodiment of the disclosure, where the method execution subject is a client terminal, and the method includes the following steps S601-S604.

In S601, two boundary lines of the area to be cut are obtained, and the boundary line shares the same vertex with the first target edge.

Generally, in order to ensure a visual effect of the final image, after obtaining the polygon corresponding to the outer contour of the zebra crossing, it is necessary to cut the polygon, so that the final zebra crossing has a cutting effect, in order to present the appearance of the zebra crossing in the actual scene to the greatest extent.

The coverage of the area to be cut can be obtained by combining the two boundary lines of the area to be cut, the first target edge and the second target edge.

In an embodiment, when the vertices at two ends of the second target edge coincide with the vertices at two ends of the first target edge, a line between a coincident vertex and its adjacent vertex of the second target edge can be used as a boundary line of the area to be cut.

In an embodiment, when the vertices at two ends of the second target edge do not coincide with the vertices at two ends of the first target edge, the vertices at two ends of the second target edge can be connected with their respective adjacent vertices at two ends of the first target edge, and the obtained two lines are used as the boundary lines of the area to be cut.

It should be noted that, each of the two boundary lines of the area to be cut has one vertex belonging to the first target edge.

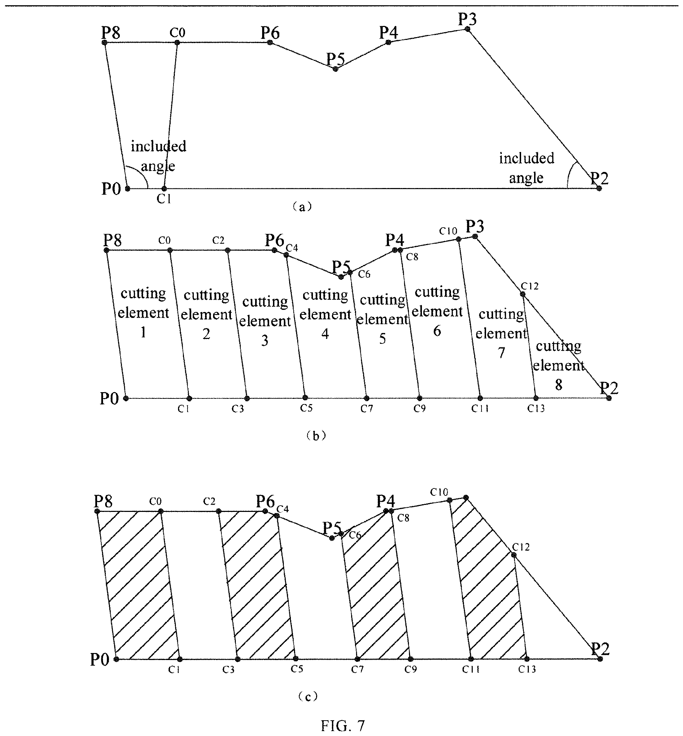

As shown in FIG. 7(a), the two vertices of the first target edge are P0 and P2, and the two vertices of the second target edge are P8 and P2. P2 is the vertex at one end of the second target edge that coincide with the vertices at two ends of the first target edge, then P2 is connected to its adjacent vertex P3 in the second target edge, and the line P2P3 can be determined as a boundary line in the area to be cut.

Further, the vertex P8 at the other end of the second target edge does not coincide with the two vertices P0 and P2 of the first target edge, and the vertex P0 is connected to its adjacent vertex P8 in the first target edge, and the line P0P8 can be identified as another boundary line in the area to be cut.

Further, the area to be cut is generated based on the two boundary lines with the first target edge and the second target edge.

In S602, two second included angles between each of the two boundary lines and the first target edge are obtained.

Further, after determining the two boundary lines, the angle between each of the two boundary lines and the first target edge can be obtained based on a position relationship between each of the boundary lines and the first target edge, and the angle can be determined as the second included angle.

As shown in FIG. 7(a), the angle between the boundary line P0P8 and the first target edge, and the angle between the boundary line P2P3 and the first target edge, are determined as the second included angles.

In S603, cutting is started from the boundary line of the large second included angle to the boundary line of the small second included angle.

In the embodiments of the disclosure, one of the two boundary lines can be used as the start position for cutting the area to be cut. The start position can be determined according to the size of the second included angle.

Generally, the angle value of the second included angle varies, and the second included angle with a larger angle value can be obtained and the corresponding boundary line can be used as the start position.

As shown in FIG. 7(a), the second included angle between the boundary line P0P8 and the first target edge is greater than the second included angle between the boundary line P2P3 and the first target edge, then the boundary line P0P8 is used as the start boundary line.

In S604, a plurality of cutting elements of the area to be cut are generated by performing slide cutting, in a cutting direction, starting from a cutting start point determined from the first vertex set.

In order to achieve the final imaging cutting effect, for the area to be cut, a cutting distance can be set. Based on the set cutting direction and the cutting distance, slide cutting is performed from the set start position to sequentially generate a plurality of cutting elements of the area to be cut.

Generally, there is a vertex shared with the first target edge in the boundary line as the start position, and the vertex can be used as the start point for cutting. Further, the preset cutting distance is determined based on a ratio of the overall area of the zebra crossing in the actual scene to the area of one of the color blocks, and the length of the first target edge.

As shown in FIG. 7(a), the vertex P0 on the first target edge is set as the initial cutting position, and the cutting distance is a distance between P0 and C1, then the slide cutting is performed based on the distance between P0 and C1 starting from P0, to obtain a plurality of cutting elements after the cutting in the area to be cut.

According to the method of this disclosure, two boundary lines of the area to be cut and two second included angles between each of the two boundary lines and the first target edge are determined. The cutting start position and the cutting direction are determined based on the size of the two second included angles, and the slide cutting is performed from the cutting start position to obtain a plurality of cutting elements in the area to be cut. The cutting elements obtained by slide cutting enables the final zebra crossing imaging to have a cutting effect, which can be as close to the actual situation as possible, and the visual effect of the imaging is ensured.

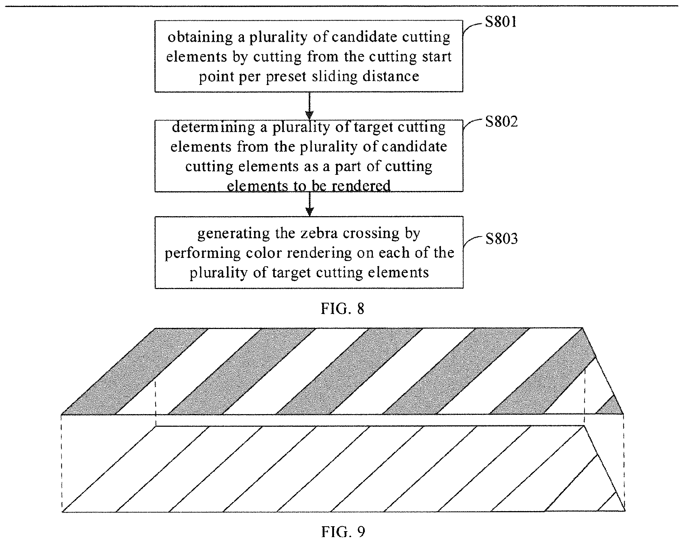

Further, it is necessary to fill the cutting elements with reference to FIG. 8. FIG. 8 is a flowchart of a method for generating a zebra crossing according to an embodiment of the disclosure. The execution subject of the method is a client terminal. As shown in FIG. 8, the method includes the following steps S801-S803.

In S801, candidate cutting elements are obtained by cutting from the cutting start point per preset slide distance.

In some embodiments, the preset slide distance can be understood as a preset slide distance, and cutting is performed based on the preset slide distance, and the cutting elements are obtained after processing the area to be cut.

Further, for the acquisition of a first cutting element, the boundary line of the determined cutting start position can be used as the boundary line of the first cutting element. Sliding is performed from the start cutting position, and sliding is stopped when the slide distance is the same as the preset slide distance, and the point on the first target edge when sliding is stopped is connected to the corresponding point on the second target edge, and the line between the two points can be used as another boundary line of the first cutting element. The another boundary line obtained by connecting the two points at the stopping position on the first and second target edges is relatively parallel to the boundary line at the start cutting position.

As shown in FIG. 7(b), the vertex P0 on the first target edge is the initial cutting position. The vertex P0 on the first target edge is the initial cutting position. The preset slide distance is the distance between P0 and C1, then slide cutting is started from P0. When sliding to the position of C1, sliding is stopped, and C1 on the first target edge is connected with the corresponding point C0 on the second target side, the line between C0 and C1 is one of the boundary lines of the first cutting element. The line between the P0 and P8 of the initial position is determined as another boundary line, and the first cutting element can be generated by combining the first target edge and the second target edge.

Further, the line between C0 and C1 in the first cutting element is determined as the boundary line of the next cutting element, and slide cutting is continued based on the distance between P0 and C1, and the process is repeated to complete the cutting of the area to be cut, in order to obtain a plurality of cutting elements.

Since it is necessary to perform color processing on the cutting elements, all the acquired cutting elements can be determined as candidate cutting elements for color processing.

In S802, a plurality of target cutting elements are selected from the plurality of candidate cutting elements as a part of cutting elements to be rendered.

In order to make the imaging of the zebra crossing close to the actual scene, after the cutting of the area to be cut is completed, based on the appearance of the zebra crossing in the actual scene, a part of cutting elements can be filtered from the candidate cutting elements, and color filling and rendering can be performed.

All candidate cutting elements can be screened at intervals, to obtain a part of the candidate cutting elements and determine the elements as target cutting elements to be rendered.

As shown in FIG. 7(b), all 8 cutting elements are determined as candidate cutting elements for color processing, which can be obtained at intervals, and cutting element 1, cutting element 3, cutting element 5 and cutting element 7 are used as the target cutting elements to be rendered.

In S803, the zebra crossing is generated by performing color rendering on each of the plurality of target cutting elements.

Further, after the target cutting elements are acquired, color rendering is performed on the target cutting elements to generate a zebra crossing close to the appearance of the zebra crossing in the actual scene.

Firstly, the vertex set corresponding to each target cutting element is obtained.

After determining the target cutting elements, the vertices corresponding to each target cutting element can be obtained and integrated into a vertex set corresponding to each target cutting element.

The area to be rendered is generated according to the vertex set of the target cutting element, and color rendering is performed on the area to be rendered to generate the zebra crossing.

As shown in FIG. 7(c), based on the vertex set of the target element, the coverage of the area to be rendered in the new polygon corresponding to the outer contour of the zebra crossing can be determined. Further, the coverage is filled with colors and rendered, which make the imaging of the zebra crossing close to the actual scene as much as possible.

For example, the cutting element 8 in FIG. 7(b) is determined as the target cutting unit to be rendered. The vertices C12, C13, P2 of the cutting element 8 and the line between every two vertices constitute a triangle area to be rendered, color rendering is performed on the area, to generate the zebra crossing corresponding to the cutting element 8.

In an embodiment, the color rendering of the area to be rendered may be in a three-dimensional rendering manner.

After determining the target cutting element to be rendered, based on the zebra crossing in the actual scene, light source parameters, shadow parameters, zebra crossing texture parameters, and color parameters are calculated in the zebra crossing imaging process, and three-dimensional rendering of the zebra crossing is realized based on the relevant parameters obtained by calculation, to obtain a three-dimensional image of the zebra crossing infinitely close to the actual scene.

As shown in FIG. 9, the three-dimensional image of the zebra crossing is realized through the three-dimensional rendering of the area to be rendered.

According to the method for generating a zebra crossing according to the disclosure, a plurality of cutting elements are obtained by sliding and cutting the area to be cut, and after screening the cutting elements that need to be color-rendered, the zebra crossing is generated. Through cutting and color rendering, the final image of the zebra crossing has a cutting effect, thereby ensuring the visual effect of the zebra crossing.

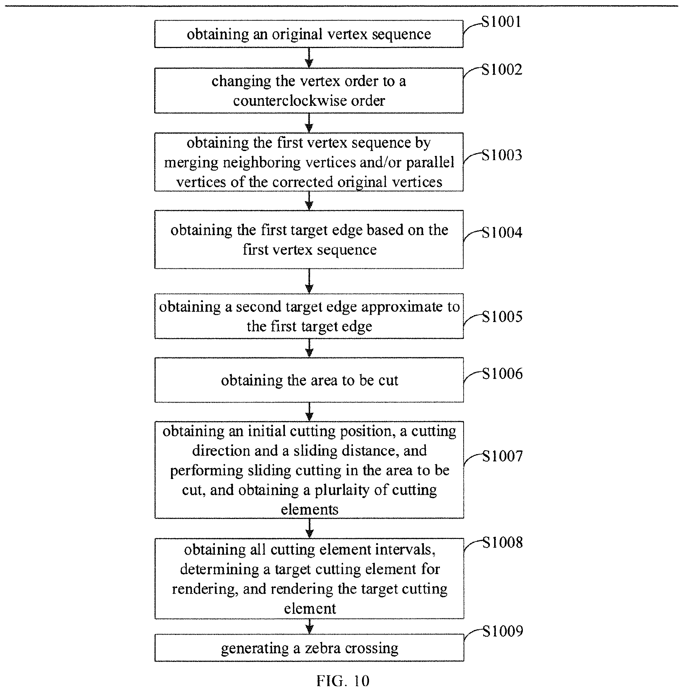

Further, in order to better understand the foregoing embodiments, FIG. 10 may be referred. FIG. 10 is a flowchart of a method for generating a zebra crossing according to an embodiment of the disclosure. As shown in FIG. 10, the method includes the following steps S1001-S1009.

In S1001, an original vertex sequence is obtained.

In S1002, counterclockwise correction is performed on the acquired original vertex sequence.

In S1003, a first vertex sequence is obtained by merging processing on adjacent vertices and/or parallel vertices in the corrected original vertices.

In S1004, a first target edge is obtained based on the first vertex sequence.

In S1005, a second target edge approximate to the first target edge is obtained.

In S1006, the area to be cut is obtained.

In S1007, the initial cutting position, cutting direction, and slide distance are obtained, and slide cutting is performed on the area to be cut, to obtain a plurality of cutting elements.

In S1008, all cutting elements are obtained at intervals, a target cutting element for rendering is determined, and rendering is performed on the target cutting element.

In S1009, the zebra crossing is generated.

After the original vertex sequence of the zebra crossing is obtained, the sequence is sorted and corrected in a counterclockwise order. After the correction is completed, adjacent vertices and/or parallel vertices are merged, to filter noise vertices and obtain the first vertex sequence. Based on the lines between every two adjacent vertices in the first vertex sequence, the longest line is obtained as the first target edge, and the second target edge is determined based on the first target edge and the remaining lines. Further, based on all the vertices in the first target edge and the second target edge, the area to be cut is generated, and slide cutting is performed based on the obtained cutting start position, cutting direction, and cutting distance, to obtain a plurality of cutting elements, and color rendering is performed on the target cutting elements obtained at intervals in the cutting elements to generate the final zebra crossing. In the disclosure, the image generation efficiency of the zebra crossing is effectively improved without excessive manual intervention. Through the merging process of the original vertex sequence, the noise vertices in the original vertices can be filtered. Based on the first vertex set and the second vertex set, the area to be cut is generated, and the obtained cutting elements are filled at intervals, so that the final zebra crossing has a cutting effect, thereby ensuring the visual effect and strengthening the imaging accuracy of the zebra crossing.

The embodiments of the disclosure also provide an apparatus for generating a zebra crossing corresponding to the method for generating a zebra crossing provided in the above embodiments. Since the apparatus for generating a zebra crossing in the embodiments of the disclosure corresponds to the method for generating a zebra crossing in the above embodiments, the implementation of the method for generating a zebra crossing also applies to the apparatus for generating a zebra crossing in the embodiments of the disclosure, which is not described in detail in the following embodiments.

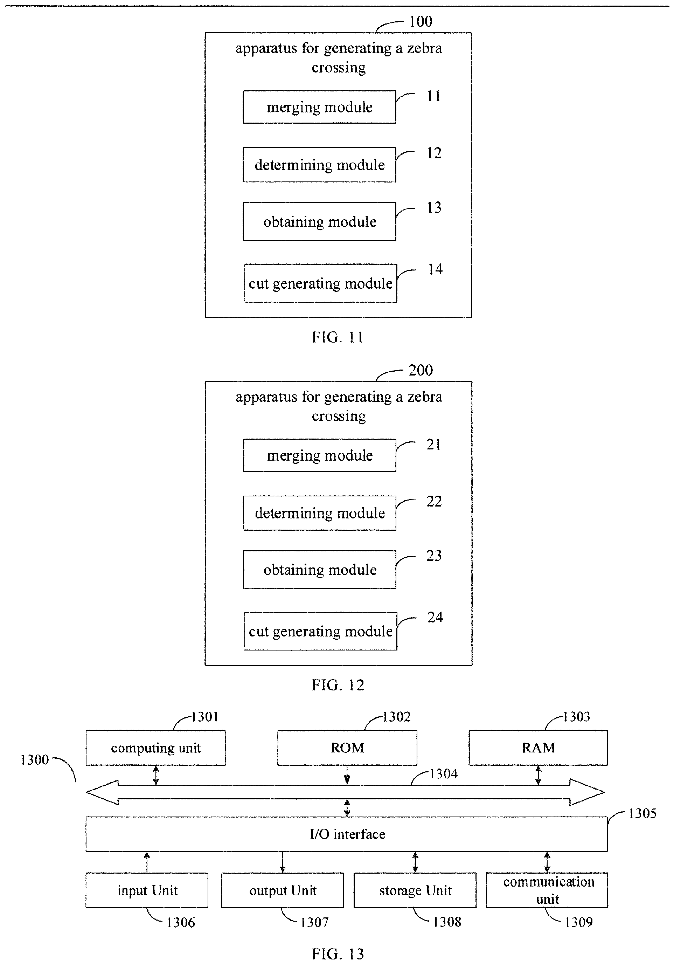

FIG. 11 is a structural schematic diagram of an apparatus for generating a zebra crossing according to an embodiment of the disclosure. As shown in FIG. 11, the apparatus for generating a zebra crossing 100 includes a merging module 11, a determining module 12, an obtaining module 13, and a cut generating module 14.

The merging module 11 is configured to obtain an original vertex sequence for generating a zebra crossing from an image, and determine a first vertex sequence by merging a plurality of vertices in the original vertex sequence.

The determining module 12 is configured to obtain a plurality of lines by connecting a plurality of vertices in the first vertex sequence in order, and determine a first target edge and a second target edge approximate to the first target edge from the plurality of lines.

The obtaining module 13 is configured to obtain a first vertex set corresponding to the first target edge and a second vertex set corresponding to the second target edge, and generate an area to be cut based on the first vertex set and the second vertex set.

The cut generating module 14 is configured to cut the area to be cut, and generate the zebra crossing by filling alternately a part of cutting elements.

FIG. 12 is a structural schematic diagram of an apparatus for generating a zebra crossing according to an embodiment of the disclosure. As shown in FIG. 12, the apparatus for generating a zebra crossing 200 includes a merging module 21, a determining module 22, an obtaining module 23, and a cut generating module 24.

It is noted that the merging module 11, the determining module 12, the obtaining module 13, and the cut generating module 14 have the same structure and function as the merging module 21, the determining module 22, the obtaining module 23, and the cut generating module 24.

In some embodiments, the determining module 22 is further configured to: obtain a length of each of the plurality of lines, and determine the longest line as the first target edge; and determine the second target edge from remaining lines other than the longest line.

In some embodiments, the determining module 22 is further configured to: determine a target line that shares the same vertex with the first target edge from the remaining lines; and add the target line to the second target edge in response to a projection point of the other vertex of the target line projecting to the first target edge falling in the first target edge.

In some embodiments, the determining module 22 is further configured to: determine a target line that shares the same vertex with the first target edge from the remaining lines; obtain a first included angle between the target line and the first target edge; and add the target line to the second target edge in response to the first included angle being an acute angle.

In some embodiments, the determining module 22 is further configured to: add the other vertex of the target line to the second vertex set.

In some embodiments, the cut generating module 24 is further configured to: obtain two boundary lines of the area to be cut, in which the boundary line shares the same vertex with the first target edge; obtain two second included angles between each of the two boundary lines and the first target edge; and start cutting from the boundary line of the large second included angle to the boundary line of the small second included angle.

In some embodiments, the cut generating module 24 is further configured to: generate a plurality of cutting elements of the area to be cut by performing slide cutting, in a cutting direction, starting from a cutting start point determined from the first vertex set.

In some embodiments, the cut generating module 24 is further configured to: obtain a plurality of candidate cutting elements by cutting from the cutting start point per preset slide distance; determine a plurality of target cutting elements from the plurality of candidate cutting elements as a part of cutting elements to be rendered; and generate the zebra crossing by performing color rendering on each of the plurality of target cutting elements.

In some embodiments, the cut generating module 24 is further configured to: obtain a vertex set corresponding to each of the plurality of target cutting elements; and generate each area to be rendered based on the vertex set corresponding to each of the plurality of target cutting elements, and generate the zebra crossing by performing color rendering on each area to be rendered.

In some embodiments, the merging module 21 is further configured to: determine a vertex order of the original vertex sequence, and change the vertex order to a counterclockwise order in response to the vertex order being a clockwise order.

In some embodiments, the merging module 21 is further configured to: determine a plurality of adjacent vertices and a plurality of parallel vertices from the original vertex sequence, and merge the plurality of adjacent vertices and the plurality of parallel vertices.

The disclosure provides an apparatus for generating a zebra crossing without excessive human intervention, which effectively improves the efficiency of generating the image of the zebra crossing. The noise vertices in the original vertices can be filtered through the merging process for the original vertex sequence, realizes the generation of the area to be cut based on the first vertex set and the second vertex set, and fills the interval of the acquired cutting elements, the imaging of the final zebra crossing is made to have a cutting effect, which ensures the visual effect and enhances the imaging accuracy of the zebra crossing.

According to the embodiments of the disclosure, the disclosure also provides an electronic device, a readable storage medium and a computer program product.

FIG. 13 is a block diagram of an electronic device 1300 according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 13, the device 1300 includes a computing unit 1301 performing various appropriate actions and processes based on computer programs stored in a read-only memory (ROM) 1302 or computer programs loaded from the storage unit 1308 to a random access memory (RAM) 1303. In the RAM 1303, various programs and data required for the operation of the device 1300 are stored. The computing unit 1301, the ROM 1302, and the RAM 1303 are connected to each other through a bus 1304. An input/output (I/O) interface 1305 is also connected to the bus 1304.

Components in the device 1300 are connected to the I/O interface 1305, including: an inputting unit 1306, such as a keyboard, a mouse; an outputting unit 1307, such as various types of displays, speakers; a storage unit 1308, such as a disk, an optical disk; and a communication unit 1309, such as network cards, modems, wireless communication transceivers, and the like. The communication unit 1309 allows the device 1300 to exchange information/data with other devices through a computer network such as the Internet and/or various telecommunication networks.

The computing unit 1301 may be various general-purpose and/or dedicated processing components with processing and computing capabilities. Some examples of computing unit 1301 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 1301 executes the various methods and processes described above, such as the method for generating a zebra crossing. For example, in some embodiments, the method may be implemented as a computer software program, which is tangibly contained in a machine-readable medium, such as the storage unit 1308. In some embodiments, part or all of the computer program may be loaded and/or installed on the device 1300 via the ROM 1302 and/or the communication unit 1309. When the computer program is loaded on the RAM 1303 and executed by the computing unit 1301, one or more steps of the method described above may be executed. Alternatively, in other embodiments, the computing unit 1301 may be configured to perform the method for generating a zebra crossing in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server can be a cloud server, also known as a cloud computing server or a cloud host, which is a host product in the cloud computing service system, to solve the traditional physical host with a Virtual Private Server (VPS) service, which has the defects of difficult management and weak business expansibility. The server can also be a server for a distributed system, or a server that incorporates a blockchain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for generating a zebra crossing, comprising:
obtaining (S101, S1001) an original vertex sequence for generating a zebra crossing from an image, and determining (S1002) a first vertex sequence by merging a plurality of vertices in the original vertex sequence;
obtaining (S102) a plurality of lines by connecting a plurality of vertices in the first vertex sequence in order, and determining (S1004, S1005) a first target edge and a second target edge approximate to the first target edge from the plurality of lines;
obtaining (S103) a first vertex set corresponding to the first target edge and a second vertex set corresponding to the second target edge, and generating (S1006) an area to be cut based on the first vertex set and the second vertex set; and
cutting (S104) the area to be cut to obtain cutting elements, and generating the zebra crossing (S1009) by filling alternately a part of cutting elements.

2. The method according to claim 1, wherein determining the first target edge and the second target edge from the plurality of lines, comprises:
determining (S401) the longest line from the plurality of lines as the first target edge; and
determining (S402) the second target edge from remaining lines other than the longest line.

3. The method according to claim 2, wherein determining the second target edge from the remaining lines, comprises:
determining a target line that shares the same vertex with the first target edge from the remaining lines; and
adding the target line to the second target edge in response to a projection point of the other vertex of the target line projecting to the first target edge falling in the first target edge.

4. The method according to claim 2, wherein determining the second target edge from the remaining lines, comprises:
determining a target line that shares the same vertex with the first target edge from the remaining lines;
obtaining a first included angle between the target line and the first target edge; and
adding the target line to the second target edge in response to the first included angle being an acute angle.

5. The method according to claim 3, further comprising:
adding (S403) the other vertex of the target line to the second vertex set.

6. The method according to one of claims 1 to 5, further comprising:
obtaining (S601) two boundary lines of the area to be cut, wherein each of the boundary lines shares the same vertex with the first target edge;
obtaining (S602) two second included angles between each of the two boundary lines and the first target edge; and
cutting (S603) along a direction from the boundary line with the large second included angle to the boundary line with the small second included angle.

7. The method according to claim 6, wherein cutting the area to be cut comprises:
generating (S604, S1007) the cutting elements of the area to be cut by performing slide cutting along a cutting direction from a cutting start point determined from the first vertex set.

8. The method according to claim 7, wherein generating the zebra crossing by filling alternately the part of cutting elements comprises:
obtaining (S801) a plurality of candidate cutting elements by cutting from the cutting start point per preset slide distance;
determining (S802, S1008) a plurality of target cutting elements from the plurality of candidate cutting elements as a part of cutting elements to be rendered; and
generating (S803) the zebra crossing by performing color rendering on each of the plurality of target cutting elements.

9. The method according to claim 8, wherein generating the zebra crossing by performing color rendering on each of the plurality of target cutting elements, comprises:
obtaining a vertex set corresponding to each of the plurality of target cutting elements; and
generating an area to be rendered based on the vertex set corresponding to each of the plurality of target cutting elements, and generating the zebra crossing by performing color rendering on the area to be rendered.

10. The method according to one of claims 1 to 9, further comprising:
determining (S201) a vertex order of the original vertex sequence, and changing (S1002) the vertex order to a counterclockwise order in response to the vertex order being a clockwise order.

11. The method according to claim 10, wherein merging the plurality of vertices in the original vertex sequence comprises:
determining (S202) a plurality of adjacent vertices and a plurality of parallel vertices from the original vertex sequence, and merging the plurality of adjacent vertices and the plurality of parallel vertices.

12. An apparatus (100, 200) for generating a zebra crossing, comprising:
a merging module (11, 21), configured to obtain an original vertex sequence for generating a zebra crossing from an image, and determine a first vertex sequence by merging a plurality of vertices in the original vertex sequence;
a determining module (12, 22), configured to obtain a plurality of lines by connecting a plurality of vertices in the first vertex sequence in order, and determine a first target edge and a second target edge approximate to the first target edge from the plurality of lines;
an obtaining module (13, 23), configured to obtain a first vertex set corresponding to the first target edge and a second vertex set corresponding to the second target edge, and generate an area to be cut based on the first vertex set and the second vertex set; and
a cut generating module (14, 24), configured to cut the area to be cut to obtain cutting elements, and generate the zebra crossing by filling alternately a part of cutting elements.

13. An electronic device, comprising:
at least one processor; and
a memory communicatively connected with the at least one processor and configured to store with instructions executable by the at least one processor;
wherein, when the instructions are executed by the at least one processor, the at least one processor is caused to execute the method according to any one of claims 1-11.

14. A non-transitory computer-readable storage medium storing computer instructions, wherein the computer instructions are execute by a processor, the processor is caused to implement the method according to any one of claims 1-11.

15. A computer program product comprising a computer program, when the computer program is executed by a processor, the method according to any one of claims 1-11 is executed.
